# FASCICULE DE BREVET EUROPEEN

(11) **EP 4 267 462 B1**
(45) Date de publication et mention de la délivrance du brevet: **20.11.2024**
(21) Numéro de dépôt: 21839574.7
(22) Date de dépôt: 20.12.2021
(51) Int. Cl.: B64D 15/04, B64D 33/02

(54) **SYSTÈME POUR AÉRONEF DE PROTECTION CONTRE LE GIVRE PAR AIR CHAUD SOUFFLÉ À PÉNALITÉ ÉNERGÉTIQUE RÉDUITE**
HEISSLUFTENTEISUNG MIT VERRINGERTEM ENERGIEVERBRAUCH FÜR FLUGZEUGE
AIRCRAFT HOT AIR ICE PROTECTION SYSTEM WITH REDUCED ENERGY PENALITY

(30) Priorité: 24.12.2020 BE 202005980
(43) Date de publication de la demande: 01.11.2023
(73) Titulaire: Sonaca S.A., 6041 Gosselies (BE)
(72) Inventeur: VIDAIC, Jonas, 7070 MIGNAULT (BE)
(74) Mandataire: Brevalex
(86) Numéro de dépôt international: PCT/EP2021/086886
(87) Numéro de publication internationale: WO 2022/136318

(56) Documents cités:
- EP-A1- 1 116 656
- EP-A1- 1 739 013
- EP-A1- 3 733 523
- US-B1- 6 267 328

## Description

### DOMAINE TECHNIQUE

La présente invention se rapporte à un système de protection contre le givre, qui s'attache à éviter la formation de glace ou l'éliminer sur une surface d'aéronef, et plus spécifiquement à un système de protection d'une surface contre le givre par projection d'air chaud sur ladite surface.

### ÉTAT DE LA TECHNIQUE ANTÉRIEURE

Le givrage, désignant l'adhérence de gouttelettes d'eau gelées, constitue un phénomène météorologique dangereux dans le domaine aéronautique. De la glace peut se former sur les surfaces portantes d'un aéronef et ainsi détériorer leurs propriétés aérodynamiques : diminution de la portance, augmentation de la traînée. De surcroît, la formation de glace peut avoir un impact sur la fiabilité des appareils de mesure, et limiter, voire paralyser, l'actionnement de dispositifs à géométrie variable comme les gouvernes mobiles. Ces aspects peuvent conduire à une perte de manoeuvrabilité, aboutissant dans le cas le plus critique au crash de l'appareil.

Lutter contre la formation de glace est donc essentiel pour garantir les performances et la sécurité des passagers. A cet égard, il est employé différents dispositifs comme des résistances chauffantes, des chambres à air gonflables activées de façon à briser la glace, ou encore des systèmes à projection d'air chaud.

De tels systèmes à projection d'air chaud, majoritairement retenus par les avionneurs dans le cas du dégivrage des becs hypersustentateurs de bord d'attaque, consistent à prélever de l'air chaud au niveau des turbomachines équipant l'aéronef, et le projeter sur les becs en l'acheminant dans l'aile.

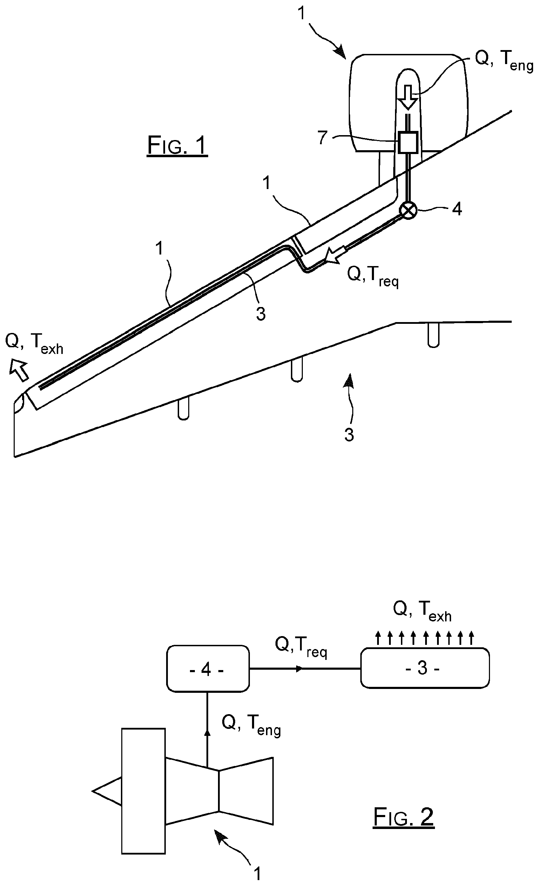

En référence aux figures 1 et 2 annexées, il est connu de prélever une quantité Q d'air chaud au niveau d'un ou plusieurs étages de compresseur de turbomachine 1, et de la transporter le long d'un bec 2 par une canalisation perforée 3. L'air chaud est évacué de ladite canalisation 3 au travers des perforations vers une surface interne de délimitation des becs 2. La surface interne ainsi chauffée empêche les gouttelettes incidentes de se solidifier sur une surface externe opposée, ou permet d'évaporer la glace déjà formée sur cette surface. Une fois projeté sur la surface interne, l'air chaud emprunte classiquement un cheminement de purge au sein des becs pour être rejeté dans sa totalité dans le milieu extérieur, comme représenté par des flèches sur la figure 2. Une vanne 4 est notamment prévue pour autoriser ou bloquer le prélèvement d'air F en fonction du besoin.

L'une des difficultés associées à un prélèvement d'air au niveau des compresseurs de turbomachine réside dans la nécessité de diminuer la température de l'air prélevé, notée T_{eng} à un niveau admissible T_{req} pour garantir la tenue mécanique des becs, à savoir notamment pour s'affranchir d'une dégradation de leurs propriétés mécaniques suite à une exposition à de fortes températures. Selon une conception connue, cette fonction est assurée par un échangeur de chaleur 7, disposé le long d'une portion d'acheminement de l'air chaud vers le bec 2.

En pratique, cet échangeur de chaleur 7 est conditionné de sorte que l'air prélevé, dont la température T_{eng} au point de prélèvement sur la turbomachine avoisine les 400°C, présente une température T_{req} en sortie de l'échangeur de chaleur 7 égale à environ 200°C. A cet égard, il est compris que la moitié de l'énergie calorifique prélevée sur la turbomachine est perdue pour rendre la quantité Q d'air prélevé exploitable. De surcroît, il est observé que l'air au moment de son rejet dans l'atmosphère, à savoir après avoir été projeté contre la surface de bec à chauffer, présente une température résiduelle, notée Tₑₓₕ, de l'ordre de 60°. Il s'ensuit qu'environ seulement un tiers de l'énergie calorifique totale disponible de l'air prélevé est utilisé.

Dès lors que le prélèvement d'air au niveau des compresseurs de turbomachine ne contribue pas à produire de l'énergie, en limitant le travail mécanique des turbines, et qu'une dissipation d'énergie est en outre rendue nécessaire pour rendre ce prélèvement d'air exploitable, il est compris qu'une telle solution de dégivrage/antigivrage à air chaud est perfectible.

L'état de l'art est également illustré par le document EP-A1-1 116 656.

Le but de l'invention est donc de proposer un système de protection contre le givre à air chaud qui limite les pénalités énergétiques liées à son fonctionnement.

### EXPOSÉ DE L'INVENTION

A cet effet, l'invention a pour objet un système de protection contre le givre d'une surface d'un aéronef par projection d'une quantité d'air de réchauffe contre ladite surface pour la réchauffer, cette quantité d'air de réchauffe nécessitant de présenter une température à la fois supérieure à une valeur seuil pour laquelle la fonction de protection contre le givre est assurée, et inférieure à une valeur maximale admissible pour les matériaux constitutifs de la surface, ce système comprenant :
- des moyens de prélèvement d'une quantité d'air de prélèvement au niveau d'une source chaude pneumatique et d'acheminement de cette quantité d'air de prélèvement, la quantité d'air de prélèvement présentant une température supérieure à la température admissible ;
- des moyens de captation et d'acheminement d'une quantité d'air de collecte correspondant à une portion de la quantité d'air de réchauffe après sa projection contre la surface à réchauffer, cette quantité d'air de collecte présentant une température inférieure à la température admissible ;
- des moyens de régulation et de mélange qui régulent les quantités d'air de collecte et de prélèvement pour former, par mélange de ces deux quantités, la quantité d'air de réchauffe à la température admissible ;
- des moyens d'acheminement vers et de projection de la quantité d'air de réchauffe contre la surface d'aéronef à réchauffer.

L'invention permet ainsi de répondre au moins partiellement aux besoins formulés ci-dessus en permettant, par l'intermédiaire d'une telle boucle de retour d'air collecté, de limiter le prélèvement au niveau de la source chaude qui ne constitue qu'une composante de l'air projeté sur la surface à réchauffer. En considérant la source chaude pneumatique et la surface à réchauffer comme désignant respectivement un compresseur de turbomachine et un bec de bord d'attaque au regard de l'état de la technique identifié, en référence aux figures 1 et 2, il est compris que le système selon l'invention permet de :
- limiter les pénalités énergétiques de la turbomachine en ce que l'air traversant son générateur de gaz est en quantité supérieure par rapport à l'utilisation d'un système de dégivrage/antigivrage par air chaud dont l'air projeté vient essentiellement de prélèvements sur compresseur ;
- s'affranchir de la nécessité d'avoir recours à un échangeur de chaleur, visant à refroidir l'air prélevé sur compresseur pour obtenir une température admissible pour les matériaux constitutifs du bec, étant donné que l'action de mélanger de la quantité de prélèvement avec la quantité de collecte assure cette fonction.

L'invention concerne également un système de protection contre le givre d'une surface d'un aéronef ainsi défini, cet aéronef étant motorisé au moyen d'au moins une turbomachine comprenant un étage de compresseur qui correspond à la source chaude pneumatique, dans lequel les moyens de prélèvement et d'acheminement de la quantité d'air de prélèvement incluent un conduit d'approvisionnement qui achemine la quantité d'air de prélèvement.

L'invention concerne également un système de protection contre le givre ainsi défini, dans lequel la surface à réchauffer est une surface de délimitation d'un bec de bord d'attaque équipant une aile de l'aéronef, dans lequel :
- les moyens d'acheminement vers et de projection de la quantité d'air de réchauffe contre la surface incluent un tube d'injection dans lequel circule la quantité d'air de réchauffe, ce tube d'injection s'étendant au sein du bec en regard de la surface et comprenant des perforations au travers desquelles la quantité d'air de réchauffe est projetée hors de ce tube d'injection contre la surface ; et
- les moyens de captation et d'acheminement de la quantité d'air de collecte incluent un tube de captation.

L'invention concerne également un système de protection contre le givre ainsi défini, dans lequel :
- la surface à réchauffer est une surface de délimitation d'un bec de bord d'attaque équipant une aile de l'aéronef ;
- le bec de bord d'attaque comporte une première chambre interne, délimitée par la surface de délimitation, dans laquelle circule la quantité d'air de réchauffe comme moyen d'acheminement vers et de projection de la quantité d'air de réchauffe contre la surface ;
- le bec de bord d'attaque comporte une deuxième chambre interne, comme moyen de captation et d'acheminement de la quantité d'air de collecte.

L'invention concerne également un système de protection contre le givre ainsi défini, dans lequel le tube de captation s'étend au sein du bec et comprend des perforations au travers desquelles la quantité d'air de collecte est admise dans ce tube de captation.

L'invention concerne également un système de protection contre le givre ainsi défini, dans lequel les moyens de mélange comportent :
- une chambre de mélange dans laquelle sont acheminées les quantités d'air de collecte et de prélèvement ;
- une vanne de contrôle qui régule le passage de la quantité d'air de prélèvement au niveau du conduit d'approvisionnement ;
- une pompe ou un compresseur qui pilote la quantité d'air de collecte admise dans ce tube de captation.

L'invention concerne également un système de protection contre le givre ainsi défini, dans lequel les moyens de mélange comportent un venturi qui délimite un col d'étrangement,
une première extrémité du venturi étant en communication avec le conduit d'approvisionnement pour recevoir la quantité de prélèvement :
le tube de captation étant en communication avec un embranchement formé au niveau du col d'étrangement pour acheminer la quantité de collecte au sein du venturi;
une deuxième extrémité du venturi étant en communication avec le tube d'injection pour l'alimenter en quantité d'air de réchauffe.

L'invention concerne également un aéronef comprenant un système selon l'une des revendications précédentes de protection contre le givre d'une de ses surfaces.

### BRÈVE DESCRIPTION DES DESSINS

- La figure 1, déjà décrite, représente une vue en élévation d'une aile d'aéronef qui supporte une turbomachine, munie de becs de bord d'attaque et d'un système antigivrage de bec à projection d'air de réchauffe selon une version connue de l'art antérieur;
- La figure 2, déjà décrite, représente un diagramme d'état qui modélise la quantité et la température de l'air de réchauffe lors d'une opération d' antigivrage opérée avec le système de la figure 1 ;
- La figure 3 représente une vue en élévation d'une aile d'aéronef qui supporte une turbomachine, munie de becs de bord d'attaque et d'un système antigivrage de bec à projection d'air de réchauffe selon une variante de l'invention ;
- La figure 4 est une vue en coupe selon la ligne A-A de la figure 3 ;
- La figure 5 représente un diagramme d'état qui modélise la quantité et la température de l'air de réchauffe lors d'une opération d'antigivrage opérée avec la variante de l'invention illustrée sur la figure 3 ;
- La figure 6 représente un diagramme d'état selon une autre variante de réalisation de l'invention.

### EXPOSÉ DÉTAILLÉ DE MODES DE RÉALISATION PARTICULIERS

Dans la description ci-dessous, un flux d'air sera caractérisé par sa température T et son débit massique Q, ce dernier étant autrement appelé « quantité » par commodité.

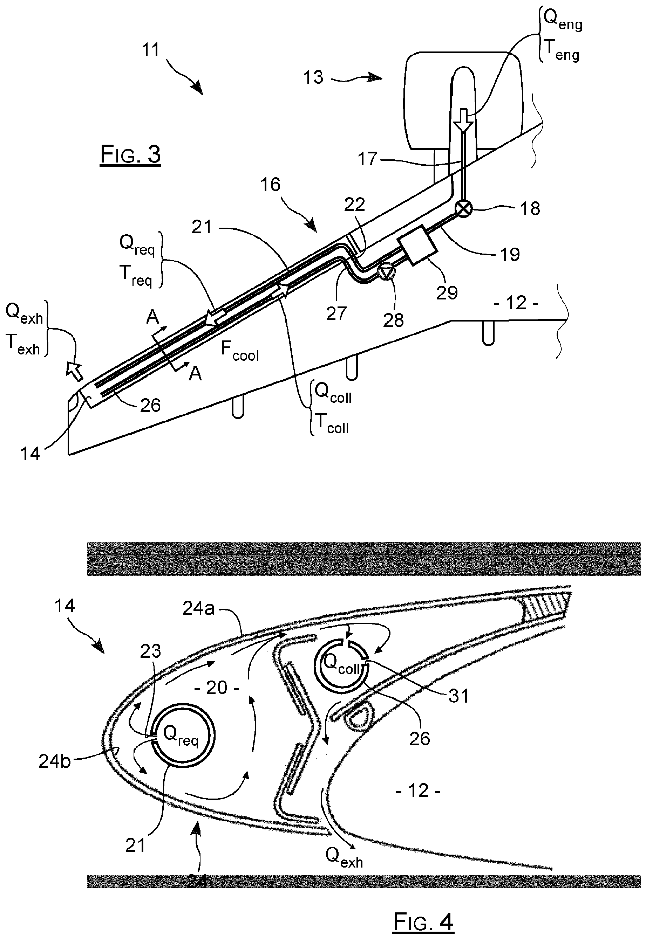

En référence à la figure 3, parmi les éléments de voilure d'un aéronef 11, il est compté deux ailes principales 12, dont une seule est représentée. Dans cet exemple, l'aéronef 11 est propulsé par des turbomachines 13 supportées par les ailes 12. Une turbomachine comporte de façon générique un générateur de gaz parcouru par un écoulement d'air. Ce générateur de gaz comporte une chambre de combustion de part et d'autre de laquelle sont agencés des étages de compresseurs, et des étages de turbines.

De manière connue, les ailes principales 12 sont équipées de becs hypersustentateurs 14 au niveau du bord d'attaque, à savoir de la partie de l'aile qui rencontre en premier le vent relatif. Un bec, aussi communément appelé « slat », est un dispositif mobile qui se déplace depuis une position en affleurement contre l'aile 12 et une position écartée pour laisser apparaitre une fente entre lui-même et cette aile afin de modifier les paramètres d'écoulement du flux d'air incident.

Afin de résoudre la problématique du givrage apparaissant au niveau des becs 14, et eu égard à leur proximité avec les turbomachines supportées par les ailes 12 correspondantes, l'aéronef 11 est équipé de systèmes antigivrage 16 par prélèvement d'air chaud au niveau des turbomachines en vue d'être projeté au niveau d'une paroi de bec à réchauffer.

Dans l'exemple de la figure 3, un système antigivrage 16 d'un bec 14 d'une aile 12 selon l'invention comporte un conduit d'approvisionnement 17 qui relie un étage ou plusieurs étages de compresseur de la turbomachine 13 équipant cette aile, à une vanne de contrôle 18. Cette vanne 18 est prévue pour réguler le passage d'une quantité Q_{eng} de prélèvement d'air au niveau du compresseur de turbomachine 13 vers un conduit d'acheminement 19 qui s'étend dans l'aile 12, dans le prolongement du conduit d'approvisionnement 17. Ce conduit d'acheminement 19 alimente un tube d'injection 21, aussi appelé « piccolo », qui parcourt une enceinte intérieure 20 du bec 14 par le biais d'une conduite 22 qui les relie en traversant le bord d'attaque de l'aile 12. Cette conduite 22 est de nature télescopique, à savoir prévue rétractable/déployable en étant formée d'un premier élément et d'un second élément qui s'emboîtent l'un dans l'autre, de sorte que le système antigivrage 16 n'entrave pas l'actionnement du bec 14.

Comme visible en détail sur la figure 4, le tube d'injection 21 s'étend à iso-distance d'une paroi de délimitation 24 de l'enceinte intérieure 20 de bec dont une surface extérieure 24a est exposée au milieu extérieur et donc assujettie au givrage. Le tube d'injection 21 présente des perforations 23 orientées vers une surface intérieure 24b de la paroi de délimitation 24 directement en vis-à-vis de sorte que l'écoulement d'air circulant en son sein, noté Q_{req} soit projeté contre cette surface intérieure 24b pour la réchauffer. La surface extérieure, 24a qui est opposée à la surface intérieure 24b, est réchauffée sous l'effet d'un échange thermique par conduction. La quantité Q_{req} projetée contre la paroi de délimitation 24 s'écoule notamment le long de cette paroi en formant un film.

L'idée à la base de l'invention est d'exploiter au mieux l'énergie calorifique du prélèvement d'air qui présente une température T_{eng} significativement supérieure à la température admissible à laquelle la paroi de délimitation 24 de bec peut être exposée sans compromettre son intégrité mécanique.

A cet égard, en référence aux figures 3 à 5 annexées, la particularité majeure du système antigivrage selon l'invention réside dans la formation d'une boucle de retour, permettant la réutilisation d'une quantité d'air dite de collecte Q_{coll}, qui correspond à une portion de la quantité d'air Q_{req} de réchauffe ayant été projetée sur la paroi de délimitation 24 du bec après avoir été véhiculée au sein du tube d'injection 21. Cette quantité de collecte Q_{coll} est acheminée puis réutilisée sous la forme d'une composante de l'air de réchauffe Q_{req}, avec la quantité d'air prélevée Q_{eng}, qui circule dans le tube d'injection 21.

Dans l'exemple des figures 3 et 4, cette fonction de réintroduction de la quantité Q_{coll} d'air est assurée au sein du système antigivrage 16 par l'association notamment d'un tube de captation 26, une chambre de mélange 29 reliée au tube de captation 26, et une pompe 28.

Une fois projetée contre la paroi de délimitation 24, la quantité Q_{req} quitte l'enceinte intérieure 20, situé en zone amont du bec 14, en étant acheminée vers l'aval du bec 14 le long d'un chemin de fuite, illustré par des flèches sur la figure 4, qui débouche sur le milieu extérieur. Le tube de captation est disposé de manière à baigner dans ce chemin de fuite, et comprend des perforations 31 à travers lesquelles la quantité d'air Q_{coll} est admise dans celui-ci sous l'action de la pompe 28 pour être acheminé vers la chambre de mélange 29 localisé dans l'aile 12. Le reste de l'air de réchauffe, à savoir la quantité Q_{req} ôtée de la quantité Q_{coll} qui est admise dans le tube de captation, poursuit son cheminement pour être refoulée dans le milieu extérieur. Comme il est compris, cette quantité non réutilisée, dite de refoulement Qₑₓₕ, présente une température Tₑₓₕ dont la valeur équivaut sensiblement à la valeur de température de la quantité de collecte Q_{coll}. Les perforations 31 sont en pratique localisés et orientés suivant l'écoulement de la quantité de réchauffe Q_{req} le long du chemin de fuite en sortie du tube d'injection 21 de sorte à optimiser le potentiel de captation de la quantité de collecte Q_{coll}.

La pression observée au sein du bec 14 étant sensiblement proche de la pression ambiante extérieure, du fait de l'existence du chemin de fuite vers le milieu extérieur emprunté par la quantité de refoulement Qₑₓₕ, la pompe 28 est adaptée pour induire un effet de succion nécessaire à l'acheminement de la quantité de collecte Q_{coll} le long du tube de captation 26. Cet acheminement est notamment assuré par le biais d'une conduite télescopique 27 qui assure la liaison entre la chambre de mélange 29 et le tube de captation 26 en traversant le bord d'attaque de l'aile 12, de manière analogue à la conduite 22 associée au tube d'injection 21.

La chambre de mélange 29 est localisée à l'interface entre le conduit d'acheminement 19 qui achemine la quantité Q_{eng} de prélèvement d'air de turbomachine 13, et le tube d'injection 21. Concrètement, cette chambre 29 reçoit les quantités de prélèvement et de collecte Q_{eng} et Q_{coll}, pour y constituer par mélange la quantité de réchauffe Q_{req} qui est acheminée vers le tube d'injection 21.

En résultante du transfert thermique convectif entre l'air de réchauffe Q_{req} et la paroi de délimitation 24 à réchauffer, la quantité d'air Q_{coll}, qui est collectée par le tube de captation 26 et acheminée vers la chambre de mélange 29, présente une température T_{coll} inférieure à la température T_{req} d'air de réchauffe. Comme il est compris, la valeur cible de la température T_{req} de la quantité d'air de réchauffe Q_{req} peut être obtenue moyennant un tel mélange entre les quantités d'air de collecte Q_{coll} et de prélèvement Q_{eng} dont les températures T_{coll}, T_{eng} associées sont respectivement inférieure et supérieure à la température T_{req} souhaitée.

La quantité d'air de réchauffe Q_{req} s'exprimant comme la somme des quantités d'air de collecte Q_{coll} et de prélèvement Q_{eng}, la boucle de retour du système antigivrage 16 selon l'invention permet ainsi de limiter la quantité d'air Q_{eng} extraite sur turbomachine 13 par rapport à un système qui en est dépourvu. Il s'ensuit que l'intégration du système antigivrage 16 selon l'invention est peu pénalisant sur les performances de la turbomachine avec lequel il coopère. Concrètement, le système 16 améliore le rendement de la turbomachine avec laquelle il coopère par rapport au système connu de l'état de la technique identifié, en ce que moins d'air en est extrait.

De surcroît, étant donné que la quantité de prélèvement Q_{eng} est captée pour réchauffer par mélange la quantité d'air de collecte Q_{coll}, il est compris que le système antigivrage 16 selon l'invention permet une exploitation brute de l'énergie calorifique prélevée sur la turbomachine 13. Autrement dit, la quantité d'air de prélèvement Q_{eng} peut être fixée sur la base du juste besoin énergétique au regard de la température T_{coll} de l'air collecté par le biais de la boucle de retour.

A cet égard, il s'agit en pratique d'établir les besoins en prélèvement et en collecte d'air selon les conditions de fonctionnement de l'aéronef 11 pour s'assurer que la température T_{req} résultante du mélange tende vers une valeur cible pour prévenir l'apparition de givre au niveau de la paroi de bec 24 de façon sécurisée au regard de la limite des matériaux constitutifs. Dans l'exemple des figures 3 et 4, cette régulation des quantités de prélèvement Q_{eng} et de collecte Q_{coll} est assuré respectivement par l'actionnement de la vanne 18 et le régime de fonctionnement de la pompe 28. En pratique, le pilotage de la vanne 18 et de la pompe 28 peut être opéré automatiquement par un calculateur selon des données d'acquisition, notamment les températures T_{eng} et T_{coll}, récoltées par des instruments de mesures qui sont placés in situ, par exemple au niveau du tube de captation 26, du conduit d'approvisionnement 17 et du bec 14.

La régulation des quantités d'air de prélèvement Q_{eng} et de collecte Q_{coll} a été expliqué, sur la base des figures 3 à 5, comme étant opérée de manière active par la vanne 18 et la pompe 28. Cependant, l'invention n'est pas limitée à cet arrangement particulier et permet de substituer la pompe 28 par un compresseur pour coopérer de la même manière avec la chambre de mélange 29.

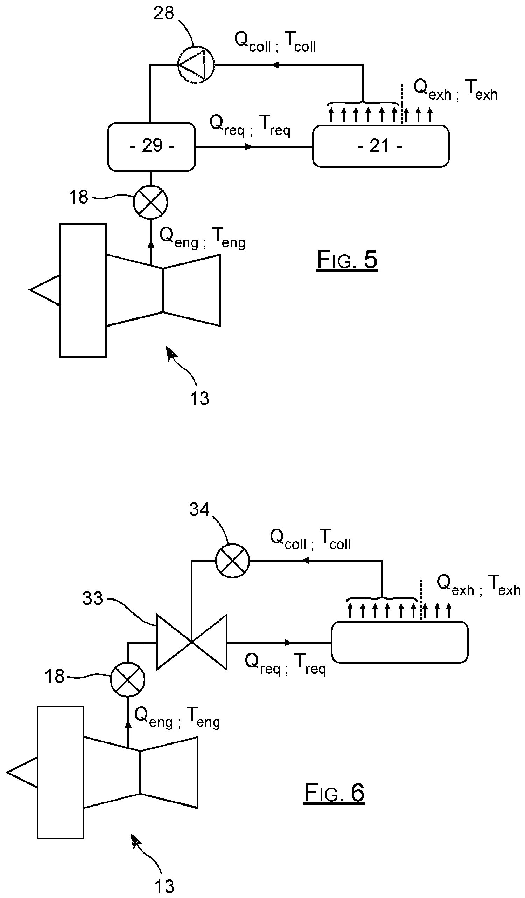

En référence à la figure 6, il est prévu en variante de remplacer la chambre de mélange 29 et la pompe 28 des figures 3 et 5 respectivement par un venturi 33 et une vanne 34 pour utiliser avantageusement l'existence d'une pression élevée au niveau du compresseur de la turbomachine 13 afin de créer un phénomène de succion de la quantité d'air de collecte Q_{coll} dans le tube de captation 26. Un tel venturi 33 est formé de l'association d'un convergeant et d'un divergeant entre lesquels est défini un col, correspondant à la zone la plus étroite et au niveau duquel est observé une dépression sous l'effet d'une accélération d'écoulement au niveau col du venturi 33. Une première extrémité du venturi est en communication avec le conduit d'approvisionnement 17 pour recevoir la quantité de prélèvement Q_{eng}, tandis que l'autre extrémité de ce venturi est en communication avec le tube d'injection 21. Le tube de captation 26 est en communication avec un embranchement formé au niveau du col. De cette manière, la dépression formée à cet emplacement force la quantité de collecte Q_{coll} à pénétrer dans le tube de captation 26 qui la guide jusqu'au venturi et ainsi à se mêler avec la quantité de prélèvement Q_{eng} pour alimenter le tube d'injection 21 en sortie avec la quantité de réchauffe Q_{req} née du mélange. De la même manière que la vanne 18, prévue pour réguler la quantité de prélèvement Q_{eng} sur la turbomachine 13, la vanne 32 est adaptée pour réguler la quantité de collecte Q_{coll} afin d'optimiser le mélange en fonction de la température d'air de réchauffe T_{req} ciblée et des températures T_{coll}, T_{eng} mesurées en fonctionnement.

A ce stade, il a été décrit différents arrangements en référence aux figures 5 et 6 permettant au système antigivrage 16 de piloter la teneur des quantités de prélèvement Q_{eng} et de collecte Q_{coll} au sein du mélange en fonction de données intrinsèques et d'environnement de l'aéronef 11 et de la turbomachine 13. Cependant, l'invention n'est pas limitée à une telle régulation dite active et permet, en variante, de tendre vers une auto-régulation de ces quantités, basée sur un équilibre de pression. A titre d'exemple, l'arrangement décrit de la figure 6 peut être modifié en retirant la vanne 34 et en dimensionnant le venturi 33 sur la base d'un modèle prédictif pour opérer adéquatement dans les conditions les plus critiques rencontrées en fonctionnement de la turbomachine 13, et plus globalement de l'aéronef 11 équipé d'un tel système antigivrage 16.

Dans l'exemple des figures 3 et 4, le tube de captation 26 est perforé le long de son étendue au sein du bec 14 à distance du tube d'injection 21. Néanmoins, l'invention n'est pas limitée à cette particularité de conception du système antigivrage 16. En pratique, il peut être envisagé d'accoler les tubes d'injection 21 et de captation 26 pour profiter d'un effet de pont thermique, ou encore de disposer le tube de captation 26 au sein de l'aile 12 en prévoyant des moyens d'acheminement de la quantité de collecte Q_{coll} vers celui-ci. Dans ce dernier cas, il peut être retenu de scinder la quantité de refoulement Qₑₓₕ de la quantité de collecte Q_{coll} en un point reculé du bec 14.

En référence aux figures, l'acheminement des quantités de prélèvement Q_{eng} et de collecte Q_{coll} est assuré par des tubes. Néanmoins, il est envisagé que les tubes d'injection et de captation 21, 26 soient substitués tous ou en partie par des chambres intégrées à l'avant et à l'arrière de la structure du bec 24. Comme il est compris, cette configuration induit que le bec 24 est conçu spécifiquement pour assurer tout ou partie l'acheminement des quantités d'air, notamment de prélèvement Q_{eng} et de collecte Q_{coll}. En pratique, cet arrangement permet de former des kits comprenant chacun au moins un bec 14 faisant partie intégrante du système antigivrage. En pareil cas, il est envisagé que la conduite télescopique 22 dessert la chambre assurant l'acheminement de la quantité de de réchauffe Q_{req} au sein du bec 14. De la même manière, la conduite télescopique 27 peut être installée directement communicante avec la chambre assurant l'acheminement de la quantité de de réchauffe Q_{req} au sein du bec 14.

Par ailleurs, dans les modes de réalisation décrits ci-dessus, la quantité de prélèvement Q_{eng} utilisée provient d'un ou plusieurs étages de compresseur de turbomachine. La nature fortement comprimée de l'air circulant au niveau de ce compresseur permet avantageusement son acheminement passif jusqu'à la chambre de mélange 29 ou le venturi 33, c'est à dire sans nécessiter l'utilisation d'une pompe, d'une trompe à jet, ou encore de tout autre dispositif apportant de l'énergie au flux pour se déplacer. Il est à noter cependant que l'utilisation d'une autre source chaude d'alimentation pneumatique du système antigivrage 16 en quantité de prélèvement Q_{eng}, intérieur comme extérieur à la turbomachine 13, ne sort pas du cadre de l'invention dès lors que la température T_{eng} de cette quantité de prélèvement Q_{eng} est supérieure à la température ciblée T_{req} de la quantité d'air de réchauffe Q_{req} qui est projeté contre la paroi de bec 24 à réchauffer. A titre d'exemple non limitatif, l'utilisation d'un moteur à piston ou d'un générateur auxiliaire d'air chaud qui peut notamment faire partie intégrante du système antigivrage 16 ou correspondre à un système embarqué de l'aéronef 11, peuvent être retenu sans sortir du cadre de l'invention.

Aussi, le système 16 à boucle de retour selon l'invention a été décrit dans le cadre d'une application antigivrage d'un bec 14 de bord d'attaque d'aile 12. Il est entendu que cette application n'est pas limitative. A titre d'exemple, le système peut être prévu pour assurer une fonction antigivrage simultanée de plusieurs becs 14 disposés successivement le long de l'aile 12, via notamment plusieurs secteurs de tube d'injection 21 reliés entre eux fluidiquement. Par ailleurs, l'invention n'est pas limitée spécifiquement à l'antigivrage de tels dispositifs hypersustentateurs, et trouve son application dans le domaine général de l'aviation en permettant concrètement l'utilisation du système 16 pour prévenir le givrage sur toute surface, portante, non travaillante, fixe, mobile, etc... de la cellule de l'aéronef 11 ou d'une nacelle de turbomachine. A cet égard, il est compris que l'invention n'est pas limitée à présenter un tube d'injection 21 de structure linéaire tel qu'illustré dans l'exemple de la figure 3, et permet d'adopter une morphologie différente qui est adaptée au contour de la surface considérée à réchauffer.

Enfin, le système 16 a été décrit comme assurant une fonction antigivrage, à savoir en maintenant la température de la paroi 24 à une valeur plancher qui empêche la formation de givre, mais cela n'entraîne pas une limitation de l'invention à l'antigivrage seulement. En pratique, un tel système peut assurer également une fonction de dégivrage, à savoir une élimination de glace d'ores et déjà formée sur la paroi 24 de bec 14.

Eu égard à ce qui précède, le système selon l'invention peut être globalement définit comme un système permettant de délivrer sur une surface d'aéronef une quantité d'air de réchauffe à une température ciblée pour lutter contre le givre, en coopérant avec une source chaude pneumatique qui fournit de l'air à une température néanmoins supérieure à la température ciblé, moyennant :
- des moyens de prélèvement et d'acheminement d'une quantité d'air prélevée au niveau de la source chaude pneumatique ;
- des moyens de captation et d'acheminement d'une quantité d'air de collecte correspondant à une portion de la quantité d'air de réchauffe après sa projection contre la surface à réchauffer;
- des moyens de mélange au niveau desquels sont acheminés la quantité d'air de prélèvement et la quantité d'air de collecte par boucle de retour pour former la quantité d'air de réchauffe ; et
- des moyens d'acheminement et de projection de la quantité d'air de réchauffe contre la surface d'aéronef à réchauffer.

## Revendications

1. Système de protection contre le givre (16) d'une surface (24) d'un aéronef (11) par projection d'une quantité d'air de réchauffe (Q_{req}) contre ladite surface (24) pour la réchauffer, cette quantité d'air de réchauffe (Q_{req}) nécessitant de présenter une température (T_{req}) à la fois supérieure à une valeur seuil pour laquelle la fonction de protection contre le givre est assurée, et inférieure à une valeur maximale admissible pour les matériaux constitutifs de la surface (24), ce système comprenant :
- des moyens (17, 19) de prélèvement d'une quantité d'air de prélèvement (Q_{eng}) au niveau d'une source chaude pneumatique (13) et d'acheminement de cette quantité d'air de prélèvement (Q_{eng}), la quantité d'air de prélèvement (Q_{eng}) présentant une température (T_{eng}) supérieure à la valeur maximale de température admissible;
- des moyens (26, 27) de captation et d'acheminement d'une quantité d'air de collecte (Q_{coll}) correspondant à une portion de la quantité d'air de réchauffe (Q_{req}) après sa projection contre la surface (24) à réchauffer, cette quantité d'air de collecte (Q_{coll}) présentant une température (T_{coll}) inférieure à la température admissible (T_{req}) ;
- des moyens (22, 21) d'acheminement vers et de projection de la quantité d'air de réchauffe (Q_{req}) contre la surface (24) d'aéronef à réchauffer,
**caractérisé en ce que** :
le système comprend des moyens de régulation et de mélange (18, 28, 29, 33, 34) qui régulent les quantités d'air de collecte (Q_{Coll}) et de prélèvement (Qeng) pour former, par mélange de ces deux quantités, la quantité d'air de réchauffe (Qreq) à la température admissible (Treq).

2. Système de protection contre le givre (16) d'une surface (24) d'un aéronef (11) selon la revendication 1, cet aéronef étant motorisé au moyen d'au moins une turbomachine (13) comprenant un étage de compresseur qui correspond à la source chaude pneumatique, dans lequel les moyens de prélèvement et d'acheminement de la quantité d'air de prélèvement (Q_{eng}) incluent un conduit d'approvisionnement (17) qui achemine la quantité d'air de prélèvement (Q_{eng}).

3. Système de protection contre le givre (16) selon la revendication 1, dans lequel la surface à réchauffer est une surface (24) de délimitation d'un bec de bord d'attaque (14) équipant une aile (12) de l'aéronef (11), dans lequel :
- les moyens (22, 21) d'acheminement vers et de projection de la quantité d'air de réchauffe (Q_{req}) contre la surface (24) incluent un tube d'injection (21) dans lequel circule la quantité d'air de réchauffe (Q_{req}), ce tube d'injection (21) s'étendant au sein du bec (14) en regard de la surface (24) et comprenant des perforations (23) au travers desquelles la quantité d'air de réchauffe (Q_{req}) est projetée hors de ce tube d'injection (21) contre la surface (24) ; et
- les moyens (26, 27) de captation et d'acheminement de la quantité d'air de collecte (Q_{coll}) incluent un tube de captation (26).

4. Système de protection contre le givre (16) selon la revendication 1, dans lequel :
- la surface à réchauffer est une surface (24) de délimitation d'un bec de bord d'attaque (14) équipant une aile (12) de l'aéronef (11) ;
- le bec de bord d'attaque (14) comporte une première chambre interne, délimitée par la surface (24) de délimitation, dans laquelle circule la quantité d'air de réchauffe (Q_{req}) comme moyen d'acheminement vers et de projection de la quantité d'air de réchauffe (Q_{req}) contre la surface (24) ;
- le bec de bord d'attaque (14) comporte une deuxième chambre interne, comme moyen de captation et d'acheminement de la quantité d'air de collecte (Q_{coll}).

5. Système de protection contre le givre (16) selon la revendication 3, dans lequel le tube de captation (26) s'étend au sein du bec (14) et comprend des perforations (31) au travers desquelles la quantité d'air de collecte (Q_{coll}) est admise dans ce tube de captation (26).

6. Système de protection contre le givre (16) selon les revendications 2 et 3, dans lequel les moyens de mélange comportent :
- une chambre de mélange (29) dans laquelle sont acheminées les quantités d'air de collecte (Q_{coll}) et de prélèvement (Q_{eng}) ;
- une vanne de contrôle (18) qui régule le passage de la quantité d'air de prélèvement (Q_{eng}) au niveau du conduit d'approvisionnement (17) ;
- une pompe (28) ou un compresseur qui pilote la quantité d'air de collecte (Q_{coll}) admise dans ce tube de captation (26).

7. Système de protection contre le givre (16) selon les revendications 2 et 3, dans lequel les moyens de mélange comportent un venturi (33) qui délimite un col d'étrangement,
une première extrémité du venturi (33) étant en communication avec le conduit d'approvisionnement (17) pour recevoir la quantité de prélèvement (Q_{eng}) :
le tube de captation (26) étant en communication avec un embranchement formé au niveau du col d'étrangement pour acheminer la quantité de collecte au sein du venturi (33) ;
une deuxième extrémité du venturi (33) étant en communication avec le tube d'injection pour alimenter ce tube d'injection (21) en quantité d'air de réchauffe (Q_{req}).

8. Aéronef (11) comprenant un système (16) selon l'une des revendications précédentes de protection contre le givre d'une de ses surfaces (24).

## Patentansprüche

1. System zum Schutz einer Oberfläche (24) eines Flugzeugs (11) vor Vereisung (16) durch Blasen einer Menge an erwärmter Luft (Q_{req}) auf die Oberfläche (24), um sie zu erwärmen, wobei die Menge an erwärmter Luft (Q_{req}) eine Temperatur (T_{req}) aufweisen muss, die sowohl höher ist als ein Schwellenwert, bei dem die Funktion des Schutzes vor Vereisung gewährleistet ist, als auch niedriger ist als ein maximal zulässiger Wert für die Materialien, aus denen die Oberfläche (24) besteht, wobei das System Folgendes umfasst:
- Mittel (17, 19) zum Abziehen einer Menge an abgezogener Luft (Q_{eng}) an einer pneumatischen Wärmequelle (13) und zum Weiterleiten der Menge an abgezogener Luft (Q_{eng}), wobei die Menge an abgezogener Luft (Q_{eng}) eine Temperatur (T_{eng}) aufweist, die höher ist als der Wert der maximal zulässigen Temperatur;
- Mittel (26, 27) zum Auffangen und Weiterleiten einer Menge an gesammelter Luft (Q_{coll}), die einem Teil der Menge an erwärmter Luft (Q_{req}) entspricht, nachdem diese gegen die zu erwärmende Oberfläche (24) geblasen wurde, wobei die Menge an gesammelter Luft (Q_{coll}) eine Temperatur (T_{coll}) aufweist, die niedriger ist als die zulässige Temperatur (T_{req});
- Mittel (22, 21) zum Weiterleiten und Blasen der Menge an erwärmter Luft (Q_{req}) gegen die zu erwärmende Flugzeugoberfläche (24),
**dadurch gekennzeichnet, dass**:
das System Regulierungs- und Mischmittel (18, 28, 29, 33, 34) umfasst, die die Mengen an gesammelter (Q_{coll}) und abgezogener (Q_{eng}) Luft regulieren, um durch Mischen der beiden Mengen die Menge an erwärmter Luft (Q_{req}) mit der zulässigen Temperatur (Treq) zu bilden.

2. System zum Schutz einer Oberfläche (24) eines Flugzeugs (11) vor Vereisung (16) nach Anspruch 1, wobei das Flugzeug mittels mindestens eines Turbinentriebwerks (13) angetrieben wird, das eine Kompressorstufe umfasst, die der pneumatischen Wärmequelle entspricht, wobei die Mittel zum Abziehen und Weiterleiten der Menge an abgezogener Luft (Q_{eng}) eine Versorgungsleitung (17) enthalten, die die Menge an abgezogener Luft (Q_{eng}) weiterleitet.

3. System zum Schutz vor Vereisung (16) nach Anspruch 1, wobei die zu erwärmende Oberfläche eine Begrenzungsoberfläche (24) für einen Vorflügel (14) ist, mit dem eine Tragfläche (12) des Flugzeugs (11) ausgestattet ist, wobei:
- die Mittel (22, 21) zum Weiterleiten und Blasen der Menge an erwärmter Luft (Q_{req}) auf die Oberfläche (24) ein Einspritzrohr (21) enthalten, in dem die Menge an erwärmter Luft (Q_{req}) zirkuliert, wobei sich das Einspritzrohr (21) innerhalb des der Oberfläche (24) zugewandten Flügels (14) erstreckt und Perforationen (23) umfasst, durch die die Menge an erwärmter Luft (Q_{req}) aus dem Einspritzrohr (21) gegen die Oberfläche (24) geblasen wird; und
- die Mittel (26, 27) zum Auffangen und Weiterleiten der Menge an gesammelter Luft (Q_{coll}) ein Fangrohr (26) enthalten.

4. System zum Schutz vor Vereisung (16) nach Anspruch 1, wobei:
- die zu erwärmende Oberfläche eine Begrenzungsoberfläche (24) für einen Vorflügel (14) ist, mit dem eine Tragfläche (12) des Flugzeugs (11) ausgestattet ist;
- der Vorflügel (14) eine erste Innenkammer, die durch die Begrenzungsoberfläche (24) begrenzt wird, in der die Menge an erwärmter Luft (Q_{req}) zirkuliert, als Mittel zum Weiterleiten und Blasen der Menge an erwärmter Luft (Q_{req}) auf die Oberfläche (24) umfasst;
- der Vorflügel (14) eine zweite Innenkammer als Mittel zum Auffangen und Weiterleiten der Menge an gesammelter Luft (Q_{coll}) umfasst.

5. System zum Schutz vor Vereisung (16) nach Anspruch 3, wobei sich das Fangrohr (26) innerhalb des Flügels (14) erstreckt und Perforationen (31) umfasst, durch die die Menge an gesammelter Luft (Q_{coll}) in das Fangrohr (26) aufgenommen wird.

6. System zum Schutz vor Vereisung (16) nach den Ansprüchen 2 und 3, wobei die Mischmittel Folgendes umfassen:
- eine Mischkammer (29), in der die Mengen an gesammelter (Q_{coll}) und abgezogener (Q_{eng}) Luft weitergeleitet werden;
- ein Steuerventil (18), das den Durchfluss der Menge an abgezogener Luft (Q_{eng}) in der Versorgungsleitung (17) regelt;
- eine Pumpe (28) oder ein Kompressor, der die Menge an gesammelter Luft (Q_{coll}) steuert, die in das Fangrohr (26) aufgenommen wird.

7. System zum Schutz vor Vereisung (16) nach den Ansprüchen 2 und 3, wobei die Mischmittel eine Venturi-Düse (33) umfassen, die einen verengten Hals begrenzt,
wobei ein erstes Ende der Venturi-Düse (33) in Verbindung mit der Versorgungsleitung (17) steht, um die abgezogene Menge (Q_{eng}) aufzunehmen;
wobei das Fangrohr (26) in Verbindung mit einer am verengten Hals ausgebildeten Abzweigung steht, um die gesammelte Menge innerhalb der Venturi-Düse (33) weiterzuleiten;
wobei ein zweites Ende der Venturi-Düse (33) in Verbindung mit dem Einspritzrohr steht, um das Einspritzrohr (21) mit einer Menge an erwärmter Luft (Q_{req}) zu versorgen.

8. Flugzeug (11), das ein System (16) nach einem der vorhergehenden Ansprüche zum Schutz einer seiner Oberflächen (24) vor Vereisung umfasst.

## Claims

1. System (16) for protecting a surface (24) of an aircraft (11) against frost by spraying a quantity of heating air (Q_{req}) against said surface (24) to heat it, this quantity of heating air (Q_{req}) requiring to have a temperature (T_{req}) both higher than a threshold value for which the function of protection against frost is provided, and below a maximum acceptable value for the materials constituting the surface (24), this system comprising:
- means (17, 19) for taking a quantity of taken air (Q_{eng}) at a pneumatic hot source (13) and conveying this quantity of taken air (Q_{eng}), the quantity of taken air (Q_{eng}) having a temperature (T_{eng}) higher than the maximum acceptable temperature;
- means (26, 27) for capturing and conveying a quantity of collected air (Q_{coll}) corresponding to a portion of the quantity of heating air (Q_{req}) after spraying of same against the surface (24) to be heated, this quantity of collected air (Q_{coll}) having a temperature (T_{coll}) below the acceptable temperature (T_{req});
- means (22, 21) for conveying towards and spraying the quantity of heating air (Q_{req}) against the aircraft surface (24) to be heated,
**characterised in that**:
the system further comprises regulation and mixing means (18, 28, 29, 33, 34) that regulate the quantities of collected (Qcoll) and taken (Qeng) air to form, by mixing these two quantities, the quantity of heating air (Qreq) at the acceptable temperature (Treq).

2. System for protecting a surface (24) of an aircraft (11) against frost (16) according to claim 1, this aircraft being driven by means of at least one turbine engine (13) comprising a compressor stage that corresponds to the pneumatic hot source, wherein the means for taking and conveying the quantity of taken air (Q_{eng}) include a supply pipe (17) that conveys the quantity of taken air (Q_{eng}).

3. System (16) for protecting against frost according to claim 1, wherein the surface to be heated is a surface (24) delimiting a leading-edge flap (14) equipping a wing (12) of the aircraft (11), wherein:
- the means (22, 21) for conveying to and spraying the quantity of heating air (Q_{req}) against the surface (24) include an injection tube (21) in which the quantity of heating air (Q_{req}) circulates, this injection tube (21) extending within the flap (14) facing the surface (24) and comprising perforations (23) through which the quantity of heating air (Q_{req}) is sprayed out of this injection tube (21) against the surface (24); and
- the means (26, 27) for capturing and conveying the quantity of collected air (Q_{coll}) include a capture tube (26).

4. System (16) for protecting against frost according to claim 1, wherein:
- the surface to be heated is a surface (24) delimiting a leading-edge flap (14) equipping a wing (12) of the aircraft (11);
- the leading-edge flap (14) includes a first internal chamber, delimited by the delimitation surface (24) wherein the quantity of heating air (Q_{req}) circulates as means for conveying towards and spraying the quantity of heating air (Q_{req}) against the surface (24);
- the leading-edge flap (14) includes a second internal chamber, as means for capturing and conveying the quantity of collected air (Q_{coll}).

5. System (16) for protecting against frost according to claim 3, wherein the capture tube (26) extends within the flap (14) and comprises perforations (31) through which the quantity of collected air (Q_{coll}) is admitted into this capture tube (26).

6. System (16) for protecting against frost according to claims 2 and 3, wherein the mixing means include:
- a mixing chamber (29) in which the quantities of collected (Q_{coll}) and taken (Q_{eng}) air are conveyed;
- a control valve (18) that regulates the passage of the quantity of taken air (Q_{eng}) in the supply pipe (17);
- a pump (28) or a compressor that controls the quantity of collected air (Q_{coll}) admitted into this capture tube (26).

7. System (16) for protecting against frost according to claims 2 and 3, wherein the mixing means include a Venturi (33) that delimits a throttling neck,
a first end of the Venturi (33) being in communication with the supply pipe (17) to receive the taken quantity (Q_{eng}):
the capture tube (26) being in communication with a branch formed at the throttling neck to convey the collected quantity in the Venturi (33);
a second end of the Venturi (33) being in communication with the injection tube to supply this injection tube (21) with a quantity of heating air (Q_{req}).

8. Aircraft (11) comprising a system (16) according to one of the preceding claims for protecting one of its surfaces (24) against frost.
